(19) Europäisches Patentamt
European Patent Office
Office européen des brevets

(11) **EP 2 758 292 B1**

(12) **FASCICULE DE BREVET EUROPEEN**

(45) Date de publication et mention
de la délivrance du brevet:
**08.06.2016 Bulletin 2016/23**

(21) Numéro de dépôt: **12773051.3**

(22) Date de dépôt: **17.09.2012**

(51) Int Cl.:
**B60W 20/00** *(2016.01)*      **B60W 10/26** *(2006.01)*
**B60W 10/20** *(2006.01)*

(86) Numéro de dépôt international:
**PCT/FR2012/052078**

(87) Numéro de publication internationale:
**WO 2013/041804 (28.03.2013 Gazette 2013/13)**

(54) **PROCEDE DE CONTROLE DE L'ENERGIE ELECTRIQUE DELIVREE PAR DES BATTERIES D'UN VEHICULE HYBRIDE**

VERFAHREN ZUR ÜBERWACHUNG DER VON HYBRIDFAHRZEUGBATTERIEN ABGEGEBENEN ELEKTRISCHEN ENERGIE

METHOD FOR MONITORING THE ELECTRIC ENERGY SUPPLIED BY HYBRID VEHICLE BATTERIES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.09.2011 FR 1158285**

(43) Date de publication de la demande:
**30.07.2014 Bulletin 2014/31**

(73) Titulaire: **Peugeot Citroën Automobiles SA
78140 Vélizy Villacoublay (FR)**

(72) Inventeurs:
• **MILHAU, Yohan
F-78400 Chatou (FR)**
• **LEBORGNE, Ludmila
F-92350 Le Plessis Robinson (FR)**
• **DOUX, Florian
F-92800 Puteaux (FR)**

(56) Documents cités:
**US-A1- 2006 278 449      US-A1- 2010 204 863
US-A1- 2011 166 732**

**Description**

La présente invention concerne un procédé de contrôle de l'énergie électrique délivrée par des batteries d'un véhicule hybride, ainsi qu'un véhicule hybride mettant en oeuvre un tel procédé de contrôle.

Les véhicules hybrides utilisant l'énergie électrique, comportent une machine électrique de traction qui délivre un couple moteur sur les roues de ce véhicule, en utilisant l'énergie stockée dans des accumulateurs électriques pouvant être réalisés suivant différents types, appelés par la suite batteries.

Les véhicules hybrides équipés d'un moteur thermique comportent généralement trois modes de fonctionnement, dépendant notamment de la demande du conducteur et du niveau de charge des batteries.

Un premier mode sans émission de gaz polluants utilise uniquement l'énergie électrique, un deuxième mode utilise uniquement l'énergie thermique, en particulier quand les batteries comportent un niveau de charge trop faible, et un troisième mode utilise simultanément les deux sources d'énergie, pour optimiser certains paramètres comme la consommation, l'autonomie ou le coût de fonctionnement.

Certains véhicules hybrides rechargeables, appelés « plug-in hybride », peuvent être connectés lors de leur stationnement à une borne d'un réseau extérieur de distribution de courant électrique, pour recharger les batteries. Le coût de l'énergie ainsi reçu par un réseau extérieur, est généralement très faible par rapport au coût de l'énergie provenant du carburant consommé par le moteur thermique.

Par ailleurs, les véhicules hybrides réalisent une récupération d'énergie cinétique de ce véhicule lors des freinages ou dans les descentes, qui est transformée en courant électrique stocké dans les batteries.

Le document US 2011/0166732 A1 décrit un procédé comprenant toutes les caractéristiques du preambule de la revendication 1.

Pour gérer l'énergie électrique des batteries, un procédé de contrôle connu, présenté notamment par le document US-A1-2011/0166732, prend en compte la longueur initialement prévue du parcours à effectuer, avant une recharge possible des batteries à une borne d'un réseau de distribution, et le niveau de charge de ces batteries au départ, pour calculer une consommation théorique constante permettant de finir le parcours avec le niveau minimum de charge. Le procédé compare ensuite régulièrement la consommation réelle d'énergie électrique délivrée par les batteries avec la consommation théorique, pour ajuster en permanence cette consommation réelle à celle théorique afin d'atteindre l'objectif dans les conditions prévues initialement.

On peut ainsi réguler sur tout le parcours la consommation électrique suivant cette valeur théorique, et ajuster la répartition des sources d'énergie carburant ou électrique afin d'utiliser toute l'énergie électrique disponible dans les batteries qui est peu chère si elle vient du réseau de distribution, et réduire la consommation de carburant.

Toutefois un problème qui se pose, est que si les conditions de roulage diffèrent à un moment de manière importante par rapport à des conditions moyennes initialement prévues, par exemple si le conducteur accélère fortement pour demander une grande vitesse, ou si le parcours comporte des montées ou des descentes prolongées, alors le niveau de charge réel des batteries est éloigné de celui initialement prévu à cette distance du parcours.

De plus des écarts de consommation d'équipements ou d'accessoires du véhicule, peuvent faire varier de manière inattendue le niveau de charge réel des batteries.

La consommation théorique prévue initialement ne convient plus pour effectuer le reste du parcours, et le procédé de contrôle de l'énergie n'est alors pas adapté.

La présente invention a notamment pour but d'éviter ces inconvénients de la technique antérieure, en proposant un procédé de contrôle de l'énergie simple et efficace, permettant d'ajuster régulièrement la consommation électrique souhaitée en fonction d'évolutions imprévues.

Elle propose à cet effet un procédé de contrôle de l'énergie électrique délivrée par des batteries pour la traction d'un véhicule hybride, prenant en compte la distance restante prévue pour un parcours et le niveau de charge disponible de ces batteries, pour calculer un coefficient de décharge souhaité des batteries qui est transmis à une fonction de répartition de la consigne de couple entre la motorisation électrique et un moteur thermique de traction, caractérisé en ce qu'il évalue de manière périodique pendant le parcours le coefficient de décharge réel de la dernière période, la distance restante du parcours ainsi que le niveau de charge disponible, pour calculer à chaque fois un nouveau coefficient de décharge cible qui permettrait en restant constant d'atteindre la fin du parcours avec un niveau final de charge minimum.

Un avantage de ce procédé de contrôle selon l'invention est qu'après chaque période de roulage, quels que soient les écarts de la consommation réelle par rapport à la consommation prévue par le coefficient de décharge cible précédent, on peut facilement établir un nouveau coefficient de décharge cible bien adapté pour atteindre la fin du parcours dans les conditions prévues.

Le procédé de contrôle selon l'invention peut en outre comporter une ou plusieurs des caractéristiques suivantes, qui peuvent être combinées entre elles.

Avantageusement, au départ du parcours commençant à la distance initiale, le véhicule réalise une première longueur initiale pendant laquelle le procédé de contrôle indique un coefficient de décharge cible des batteries comportant une valeur arbitraire prédéfinie.

En particulier, la valeur arbitraire prédéfinie du coefficient de décharge des batteries, peut être la valeur maximale.

Avantageusement, la longueur initiale est la valeur minimale entre un seuil prédéfini pour tous les parcours, et une fraction de la distance totale du parcours commencé, qui peut être notamment le dixième de ce parcours.

Avantageusement, au début d'une période le nouveau coefficient de décharge cible pour cette période, est calculé en multipliant le coefficient de décharge précédent par la différence entre le niveau de charge souhaité à la fin de la période et le niveau de charge actuel, et en le divisant par la différence entre le niveau de charge théorique à la fin de la période en conservant le coefficient de décharge précédent, et le niveau de charge actuel.

Avantageusement, le procédé de contrôle est désactivé quand l'écart en valeur absolue entre le niveau final de charge des batteries et le niveau actuel disponible, est inférieur à un seuil d'atteinte de consigne.

L'invention a aussi pour objet un véhicule hybride comprenant une fonction de répartition de la consigne de couple entre la motorisation électrique et un moteur thermique de traction, comportant un calculateur mettant en oeuvre un procédé de contrôle de l'énergie électrique délivrée par des batteries de traction, comprenant l'une quelconque des caractéristiques précédentes.

L'invention sera mieux comprise et d'autres caractéristiques et avantages apparaîtront plus clairement à la lecture de la description ci-après, donnée à titre d'exemple et de manière non limitative en référence aux dessins annexés dans lesquels :

- la figure 1 est un organigramme de différentes fonctions liées au procédé de contrôle;
- la figure 2 est un graphique décrivant le fonctionnement de ce procédé de contrôle pendant une période initiale, avec la distance du parcours présentée sur l'axe des abscisses, et le niveau de charge des batteries présenté sur l'axe des ordonnés ; et
- la figure 3 est un graphique décrivant le fonctionnement de ce procédé de contrôle pendant une période incrémentale.

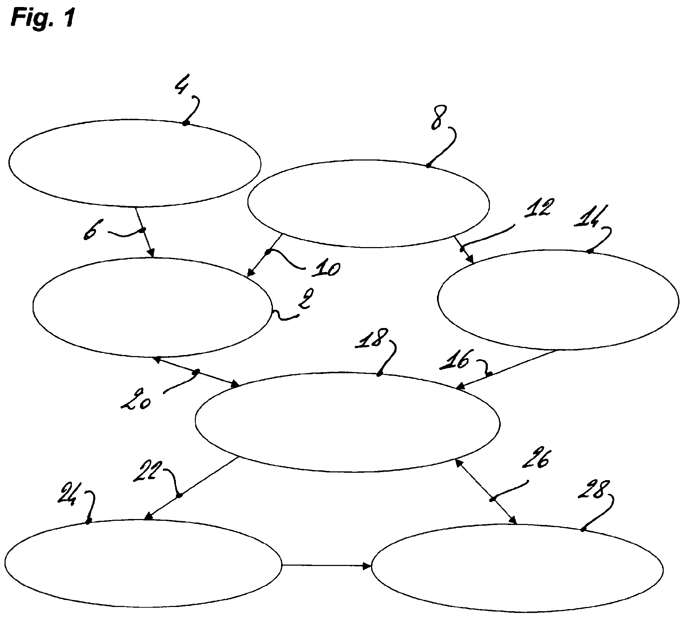

La figure 1 présente différentes fonctions d'un véhicule hybride, comprenant des batteries d'alimentation 4 de machines électriques de traction, délivrant une information du niveau de charge « Niv » utilisable pour la traction 6 et restant dans ces batteries, à un procédé de contrôle de l'énergie électrique 2.

On notera que les machines électriques de traction peuvent comporter une ou plusieurs machines, qui entraînent les roues avant ou les roues arrière du véhicule.

Une fonction de réception des volontés du conducteur 8, reçoit des demandes du conducteur pour préparer le parcours à effectuer et pour conduire le véhicule, et délivre au procédé de contrôle 2 une information sur la distance cible 10 « d_cible » restant à parcourir pour le parcours prévu.

La fonction de réception des volontés du conducteur 8 délivre de plus à une interface de traitement de la volonté de ce conducteur 14, une information sur la demande d'accélération 12 de ce conducteur au cours de la conduite.

L'interface de traitement 14 traite cette demande d'accélération 12, pour délivrer une consigne de couple aux roues 16 à une fonction de répartition intelligente de la consigne de couple 18, répartissant cette consigne entre un moteur thermique 24 et une machine électrique 28 pouvant assurer tous les deux la traction du véhicule.

La fonction de répartition de couple 18 reçoit aussi du procédé de contrôle de l'énergie 2, un coefficient de décharge 20 « Cd » compris entre 0 et 1, qui représente le taux d'utilisation souhaité des batteries pendant une période du parcours.

Pour un coefficient de décharge de 0 le procédé de contrôle 2 demande à la fonction de répartition de couple 18, une utilisation minimale de l'énergie électrique qui se limite à l'énergie nécessaire pour alimenter le réseau de bord, et au minimum nécessaire pour la répartition de couple entre la machine électrique 28 et le moteur thermique 24.

Pour un coefficient de décharge de 1 le procédé de contrôle 2 demande à la fonction de répartition de couple 18, une utilisation maximale de l'énergie électrique dans les limites d'une répartition optimale de ce couple entre les deux motorisations.

La fonction de répartition de couple 18 traite les informations reçues, et envoie une consigne de couple moteur thermique 22 au moteur thermique 24, et une consigne de couple moteur électrique 26 à la machine électrique 28, ces deux couples venant ensuite s'appliquer sur les roues motrices du véhicule pour accélérer le véhicule en réponse à la demande du conducteur.

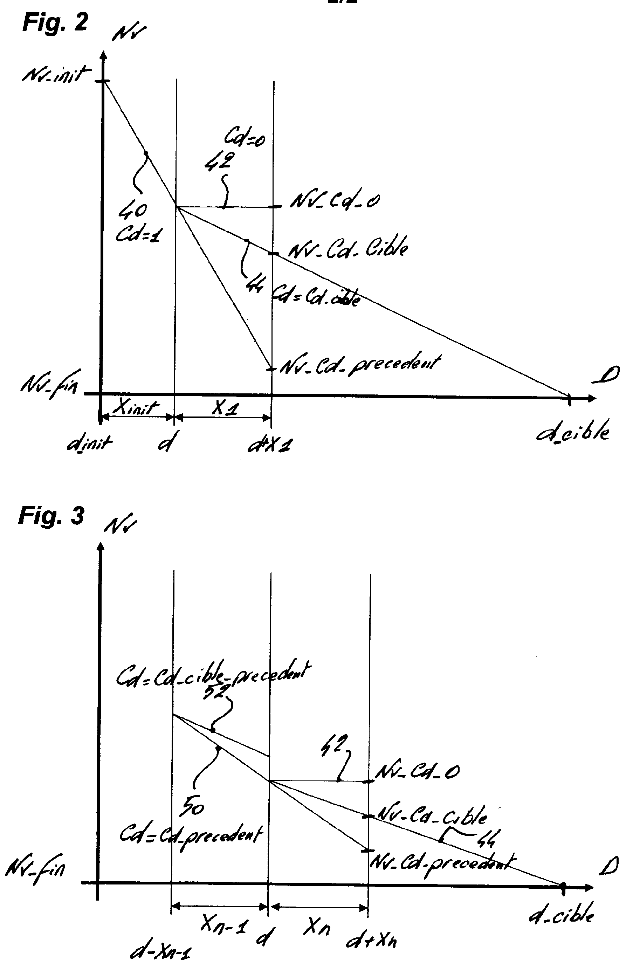

La figure 2 présente sur l'axe des ordonnés Nv le niveau initial de charge des batteries Nv-init au début d'un parours, et le niveau final admissible de fin de parcours Nv_fin, comprenant une réserve pour assurer ultérieurement des fonctions comme le redémarrage du véhicule. Ces niveaux sont enregistrés par le procédé de contrôle de l'énergie 2.

Le procédé de contrôle de l'énergie 2 enregistre aussi la distance totale du parcours d_cible, qui peut venir du conducteur donnant cette indication à la fonction de réception des volontés 8, où d'autres moyens comme un programme des circulations journalières du véhicule prévues à l'avance.

Chaque droite 40, 42, 44 du tableau comporte une pente qui représente un coefficient de décharge des batteries 4 donné par le procédé de contrôle de l'énergie 2. La pente la plus forte 40 correspond à une décharge autorisée maximale avec Cd=1, et la pente nulle 42 correspond à une décharge quasiment nulle avec Cd=0, la batterie délivrant alors seulement un niveau très faible de charge nécessaire pour le fonctionnement du réseau de bord notamment.

Au départ du parcours commençant à la distance initiale d_init, le véhicule réalise une première longueur initiale Xinit pendant laquelle le procédé de contrôle 2 autorise un coefficient de décharge maximale 40 des batteries.

Avantageusement, la longueur initiale Xinit est la valeur minimale entre un seuil X0 prédéfini pour tous les parcours, et le dixième de la distance totale d_cible de ce parcours qui a commencé.

Après la longueur initiale Xinit conduisant à la distance d, le procédé de contrôle 2 effectue une mise à jour du coefficient de décharge Cd qui sera appliqué sur la période incrémentale de distance suivante X1, pour arriver à la distance d+X1.

Le nouveau coefficient de décharge cible 44 avec Cd=Cd_cible, est calculé en fonction du coefficient de décharge réel précédent 40, de la distance à parcourir restante et du niveau de charge disponible Nv_Cd_0, pour atteindre dans le cas où ce coefficient serait respecté, la fin du parcours d_cible avec un niveau de charge qui est au minimum requis Nv_fin.

On peut alors réaliser le calcul suivant pour obtenir Cd_cible:

$$\text{Cd\_cible} = \text{Cd\_précédent} * (\text{Nv\_Cd\_cible} - \text{Nv\_Cd\_0}) / (\text{Nv\_Cd\_précédent} - \text{Nv\_Cd\_0})$$

En prenant :

- Nv_Cd_0 = niveau de charge à la distance d ;
- Nv_Cd_cible = niveau de charge souhaité à la distance d+X1, en comptant une décharge linéaire pour le parcours restant ; et
- Nv_Cd_précédent = niveau de charge calculé à la distance d+X1 avec le coefficient de décharge précédent 40, qui est dans ce cas Cd=1.

La figure 3 présente une itération du procédé qui est renouvelé pour des périodes constantes ou variables comprenant des distances X, pour établir un nouveau coefficient de décharge Cd_cible 44 qui tiendra compte de la consommation réelle d'énergie électrique pendant l'étape précédente. Des événements imprévus comme une forte demande de couple du conducteur qui souhaite rouler plus vite, une circulation sur des pentes ou le fonctionnement d'accessoires, peuvent en effet modifier sensiblement la consommation réelle par rapport à celle prévue.

Le nouveau coefficient de décharge cible 44 comprenant Cd=Cd_cible, est calculé de la même manière en fonction du coefficient de décharge réel précédent 50, de la distance à parcourir restante et du niveau de charge disponible Nv_Cd_0, pour atteindre à nouveau dans le cas où ce coefficient serait respecté, la fin du parcours d_cible avec le niveau de charge qui est au minimum requis Nv_fin.

On obtient de cette manière lors de l'avancement, pour des cas standards de conduite et de parcours ne comportant pas de forte irrégularité, après une succession d'étapes et de corrections du coefficient de décharge Cd, une convergence de ces coefficients de décharge cible 44 qui comportent des écarts entre eux de plus en plus faibles.

Le procédé de contrôle est désactivé quand l'écart en valeur absolue entre le niveau final de charge des batteries Nv_fin et le niveau disponible Nv_Cd_0, est inférieur à un seuil d'atteinte de consigne. On est alors proche du niveau final de charge des batteries, qui ne peuvent plus fournir d'énergie pour la traction du véhicule.

On peut ainsi prévoir pour une majorité des cas une consommation d'énergie électrique relativement linéaire pendant le parcours, et obtenir des batteries qui arrivent au niveau final Nv_fin sensiblement à la fin de ce parcours D_cible. On maîtrise ainsi des démarrages non souhaitables du moteur thermique en fin de parcours, qui consomment une énergie onéreuse.

**Revendications**

1. - Procédé de contrôle de l'énergie électrique délivrée par des batteries (4) pour la traction d'un véhicule hybride, prenant en compte la distance restante prévue pour un parcours et le niveau de charge disponible (Nv) de ces batteries, pour calculer un coefficient de décharge souhaité (Cd) des batteries qui est transmis à une fonction de répartition de la consigne de couple (18) entre la motorisation électrique (28) et un moteur thermique de traction (24), **caractérisé en ce qu'**il évalue de manière périodique pendant le parcours le coefficient de décharge réel de la dernière période (40, 50), la distance restante du parcours ainsi que le niveau de charge disponible (Nv), pour calculer à chaque fois un nouveau coefficient de décharge cible (44) qui permettrait en restant constant d'atteindre la fin du parcours (d_cible) avec un niveau final de charge minimum (Nv_fin).

2. - Procédé de contrôle d'une batterie suivant la revendication 1, **caractérisé en ce qu'**au départ du parcours commençant à la distance initiale (d_init), le véhicule réalise une première longueur initiale (Xinit) pendant laquelle le procédé de contrôle (2) indique un coefficient de décharge cible (40) des batteries (4) comportant une valeur arbitraire prédéfinie.

3. - Procédé de contrôle d'une batterie suivant la revendication 2, **caractérisé en ce que** la valeur arbitraire prédéfinie du coefficient de décharge des batteries, est la valeur maximale (40).

4. - Procédé de contrôle d'une batterie suivant la revendication 2 ou 3, **caractérisé en ce que** la longueur initiale (Xinit) est la valeur minimale entre un seuil prédéfini pour tous les parcours, et une fraction de la distance totale (D_cible) du parcours commencé, qui peut être notamment le dixième de ce parcours.

5. - Procédé de contrôle d'une batterie suivant l'une quelconque des revendications précédentes, **caractérisé en ce qu'**au début d'une période (d) le nouveau coefficient de décharge cible (Cd_cible) pour cette période (d+Xn), est calculé en multipliant le coefficient de décharge précédent (Cd_précédent) par la différence entre le niveau de charge souhaité à la fin de la période (Nv_Cd_cible) et le niveau de charge actuel (Nv_Cd_0), et en le divisant par la différence entre le niveau de charge théorique (Nv_Cd_précédent) à la fin de la période (d+X1) en conservant le coefficient de décharge précédent (Cd_précédent), et le niveau de charge actuel (Nv_Cd_0).

6. - Procédé de contrôle d'une batterie suivant l'une quelconque des revendications précédentes, **caractérisé en ce qu'**il est désactivé quand l'écart en valeur absolue entre le niveau final de charge des batteries (Nv_fin) et le niveau actuel disponible (Nv_Cd_0), est inférieur à un seuil d'atteinte de consigne.

7. - Véhicule hybride comprenant une fonction de répartition de la consigne de couple (18) entre la motorisation électrique (28) et un moteur thermique de traction (24), **caractérisé en ce qu'**il comporte un calculateur mettant en oeuvre un procédé de contrôle de l'énergie électrique (2) délivrée par des batteries de traction (4), réalisé suivant l'une quelconque des revendications précédentes.

## Patentansprüche

1. Verfahren zur Steuerung der von Hybridfahrzeugbatterien (4) für den Antrieb eines Hybridfahrzeugs abgegebenen elektrischen Energie, das die vorgesehene restliche Distanz für eine Route und das verfügbare Ladeniveau (Nv) dieser Batterien berücksichtigt, um einen gewünschten Entladekoeffizienten (Cd) der Batterien zu berechnen, der zu einer Funktion (18) zum Verteilen des Solldrehmoments zwischen dem elektrischen Antrieb (28) und einer Antriebsbrennkraftmaschine (24) übertragen wird, **dadurch gekennzeichnet, dass** es periodisch während der Route den realen Entladekoeffizienten der letzten Periode (40, 50), die verbleibende restliche Distanz der Route sowie das verfügbare Ladeniveau (Nv) bewertet, um jedes Mal einen neuen Ziel-Entladekoeffizienten (44) zu berechnen, der es bei Konstantbleiben erlauben würde, das Ende der Route (d_cible) mit einem Mindest-Endladeniveau (Nv_fin) zu erreichen.

2. Verfahren zur Steuerung einer Batterie nach Anspruch 1, **dadurch gekennzeichnet, dass** das Fahrzeug zu Beginn der Route, die an der anfänglichen Distanz (d_init) beginnt, eine erste anfängliche Länge (Xinit) ausführt, während das Steuerverfahren (2) einen Ziel-Entladekoeffizienten (40) der Batterien (4) angibt, der einen vordefinierten willkürlichen Wert umfasst.

3. Verfahren zur Steuerung einer Batterie nach Anspruch 2, **dadurch gekennzeichnet, dass** der vordefinierte willkürliche Wert des Entladekoeffizienten der Batterien der Maximalwert (40) ist.

4. Verfahren zur Steuerung einer Batterie nach Anspruch 2 oder 3, **dadurch gekennzeichnet, dass** die anfängliche Länge (Xinit) der Mindestwert zwischen einem vordefinierten Schwellenwert für alle Routen ist, und ein Bruchteil der Gesamtdistanz (D_cible) der begonnenen Route, der insbesondere das Zehntel dieser Route sein kann.

5. Verfahren zur Steuerung einer Batterie nach einem der vorhergehenden Ansprüche, **dadurch gekennzeichnet, dass** zu Beginn einer Periode (d) der neue Ziel-Entladekoeffizient (Cd_cible) für diese Periode (d+Xn) berechnet wird, indem der vorhergehende Entladekoeffizient (Cd_précédent) mit dem Unterschied zwischen dem gewünschten Ladeniveau am Ende der Periode (Nv_Cd_cible) und dem aktuellen Ladeniveau (Nv_Cd_0) multipliziert wird, und durch die Differenz zwischen dem theoretischen Ladeniveau (Nv_Cd_précédent) und dem Ende der Periode (d+X1) dividiert wird, indem der vorhergehende Entladekoeffizient (Cd_précédent) und das aktuelle Ladeniveau (Nv_Cd_0) beibehalten werden.

6. Verfahren zur Steuerung einer Batterie nach einem der vorhergehenden Ansprüche, **dadurch gekennzeichnet, dass** es deaktiviert wird, wenn der Unterschied in Absolutwert zwischen dem Endladeniveau der Batterien (Nv_fin) und dem verfügbaren aktuellen Niveau (Nv_Cd_0) kleiner ist als ein Sollwerterreichungsschwellenwert.

7. Hybridfahrzeug, das eine Funktion (18) zum Verteilen des Solldrehmoments zwischen dem Elektroantrieb (28) und einer Antriebsbrennkraftmaschine (24) umfasst, **dadurch gekennzeichnet, dass** es einen Rechner umfasst, der ein Verfahren zur Steuerung der elektrischen Energie (2), die von den Antriebsbatterien (4) geliefert wird, gemäß einem der vorhergehenden Ansprüche umsetzt.

## Claims

1. A method for monitoring the electric energy supplied by batteries (4) for the propulsion of a hybrid vehicle, wherein the estimated remaining distance of a journey and the available charge level (Nv) of said batteries are taken into account in order to calculate a desired discharge coefficient (Cd) of said batteries, which is transmitted to a distribution function of the torque setting (18) between the electric motorization (28) and a propulsion heat engine (24), **characterized in that** it makes an assessment periodically along the journey, according to the real discharge coefficient of the last period (40, 50), the remaining distance of the journey and the available charge level (Nv), in order to calculate in each instance a new target discharge coefficient (44) making it possible, while remaining consistent, to reach the end of the journey (d_cible) with a final minimum charge level (Nv_fin).

2. The method for monitoring a battery according to Claim 1, **characterized in that** at the start of the journey commencing at the initial distance (d_init), the vehicle realizes a first initial length (Xinit) during which the monitoring method (2) indicates a target discharge coefficient (40) of the batteries (4) comprising a predefined arbitrary value.

3. The method for monitoring a battery according to Claim 2, **characterized in that** the predefined arbitrary value of the discharge coefficient of the batteries is the maximum value (40).

4. The method for monitoring a battery according to Claim 2 or 3, **characterized in that** the initial length (Xinit) is the minimum value between a predefined threshold for all the journeys and a fraction of the total distance (D-cible) of the commenced journey, which can be in particular the tenth of this journey.

5. The method for monitoring a battery according to any one of the preceding claims, **characterized in that** at the start of a period (d), the new target discharge coefficient (Cd_cible) for this period (d+Xn) is calculated by multiplying the preceding discharge coefficient (Cd_precedent) by the difference between the desired charge level at the end of the period (Nv_Cd_cible) and the current charge level (Nv_Cd_0), and by dividing it by the difference between the theoretical charge level (Nv_Cd_precedent) at the end of the period (d+X1), retaining the preceding discharge coefficient (Cd_precedent), and the current charge level (Nv_Cd_0).

6. The method for monitoring a battery according to any one of the preceding claims, **characterized in that** it is deactivated when the difference in absolute value between the final charge level of the batteries (Nv_fin) and the current available level (Nv_Cd_0) is less than a setpoint threshold.

7. A hybrid vehicle including a function for distribution of the torque setting (18) between the electric motorization (28) and a propulsion heat engine (24), **characterized in that** it comprises a computer implementing a method for monitoring the electric energy (2) supplied by batteries for propulsion (4), realized according to any one of the preceding claims.

**Fig. 1**

**Fig. 2**

**Fig. 3**

**EP 2 758 292 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   US 20110166732 A1